# EUROPÄISCHE PATENTSCHRIFT

(11) **EP 2 922 679 B1**
(45) Veröffentlichungstag und Bekanntmachung des Hinweises auf die Patenterteilung: **14.11.2018**
(21) Anmeldenummer: 13811803.9
(22) Anmeldetag: 21.11.2013
(51) Int. Cl.: B29C 45/16, B29C 45/14, B29C 37/00, B29C 45/56, B29C 70/08, B29C 70/48, B29L 31/30, B29K 75/00, D06N 3/00, D06N 3/14, B29K 105/08

(54) **VERFAHREN ZUR HERSTELLUNG EINES FLÄCHIGEN KRAFTFAHRZEUGKAROSSERIEELEMENTS**
METHOD FOR PRODUCING A SHEET-LIKE MOTOR VEHICLE BODY ELEMENT
PROCÉDÉ DE FABRICATION D'UN ÉLÉMENT PLAT DE CARROSSERIE DE VÉHICULE AUTOMOBILE

(30) Priorität: 23.11.2012 DE 102012111350
(43) Veröffentlichungstag der Anmeldung: 30.09.2015
(73) Patentinhaber: Webasto SE, 82131 Stockdorf (DE)
(72) Erfinder: KIESEWETTER, Frank, 82110 Germering (DE); WOKÖCK, Jan, 83053 Bad Aibling (DE)
(74) Vertreter: advotec.
(86) Internationale Anmeldenummer: PCT/EP2013/074377
(87) Internationale Veröffentlichungsnummer: WO 2014/079923

(56) Entgegenhaltungen:
- EP-A1- 1 342 545
- EP-A1- 1 666 225
- DE-A1- 19 755 111
- DE-A1-102010 005 700
- DE-A1-102010 015 426
- DE-U1-202009 001 216
- FR-A1- 2 915 421

## Beschreibung

Die Erfindung betrifft ein Verfahren zur Herstellung eines Kraftfahrzeugkarosserieelements, das aus einem flächigen Kunststoffformteil gebildet ist.

Aus der Praxis sind Kraftfahrzeugkarosserieelemente bekannt, die aus einem flächigen Kunststoffformteil gebildet sind, welches ein Faserverbundbauteil, insbesondere ein Karbon-Faserverbundbauteil darstellt. Häufig ist es gewünscht, dass das Karbon-Faserverbundbauteil als so genanntes Sichtkarbonelement ausgebildet ist, bei dem die Struktur einer Karboneinlage von außen erkennbar ist. Bei der Herstellung derartiger Bauteile wird ein Faserverbundelement, das die Steifigkeit des jeweiligen Bauteils vorgibt, in aufwändiger Weise mit mehreren Lackschichten versehen wird. Auf diese Weise kann eine Sichtfläche hoher Güte hergestellt werden, die auch im Automobilbereich als so genannte Class-A-Fläche genutzt werden kann. Der Lackierprozess ist zeitaufwändig und damit auch kostenintensiv.

Die FR 2 915 421 A1 beschreibt ein Herstellungsverfahren, bei dem eine Verbundstruktur kontinuierliche und als Halbzeug dienende Verstärkungsfasern enthält, welche in einem Formhohlraum eines Injektionswerkzeugs angeordnet werden. Daraufhin wird in einen Spalt zwischen der Verbundstruktur und einer Begrenzungsfläche des Formhohlraums eine nachgiebige Beschichtung nach einem Spritzgießverfahren eingebracht. Anschließend wird die Form wiederum geöffnet, um einen Lack einspritzen zu können.

Aus EP 1 342 545 A1 ist ein Verfahren zum Herstellen eines großflächigen Kunststoffformteils bekannt, wobei das Verfahren das Auftragen einer Oberflächenschicht auf eine glasfaserverstärkte Thermoplast-Matte mittels eines Tauchkantenprägewerkzeugs umfasst.

Aus DE 197 55 111 A1 ist zudem ein lackiertes Kunststoffteil bekannt, wobei das Kunststoffteil aus einem Kohlefasergewebe gebildet werden kann und eine Lackschicht auf das Kunststoffformteil in einem Spritzgießwerkzeug angespritzt wird. Zur Ausbildung einer Oberfläche hoher Güte wird während des Aushärtens der Lackschicht ein Nachdruck aufrecht erhalten. Die Lackschicht kann aus einem Polyurethanlack bestehen.

Bei dem aus DE 10 2010 005 700 A1 bekannten Verfahren wird ein Verbundbauteil hergestellt, wobei eine Deckschicht mit Class-A-Qualität auf eine Trägerschicht aufgebracht wird. Auf die Deckschicht kann zusätzlich eine Lackschicht aus farblosem Klarlack angebracht sein. Die Deckschicht wird aus Polyurethan gefertigt und bei erhöhtem Druck ausgehärtet.

Der Erfindung liegt die Aufgabe zugrunde, ein Verfahren zur Herstellung eines aus einem flächigen Kunststoffformteil gebildeten Kraftfahrzeugkarosserieelements sowie ein entsprechendes Kraftfahrzeugkarosserieelement zu schaffen, bei welchem eine nachträgliche Lackierung bzw. separate Lackierung entbehrlich ist.

Diese Aufgabe ist erfindungsgemäß durch das Verfahren mit den Merkmalen des Patentanspruchs 1 gelöst.

Erfindungsgemäß wird mithin ein Verfahren zur Herstellung eines aus einem flächigen Kunststoffformteil gebildeten Kraftfahrzeugkarosserieelements vorgeschlagen, umfassend folgende Schritte:
- Herstellen eines Faserverbundelements, das aus einem flächigen Faserwerkstoffhalbzeug gebildet ist;
- Anordnen des Faserverbundelements in einem Formhohlraum eines Injektionswerkzeugs, das ein Oberwerkzeug und ein Unterwerkzeug umfasst, so dass eine zu beschichtende Oberseite des Faserverbundelements von einer Begrenzungsfläche des Formhohlraums über einen Spalt beabstandet ist;
- Einbringen eines Beschichtungswerkstoffs in den Spalt, so dass sich an der zu beschichtenden Oberseite des Faserverbundelements eine Beschichtung ausbildet;
- Ausüben eines Drucks auf den Beschichtungswerkstoff mittels des Injektionswerkzeugs durch Verfahren des Oberwerkzeugs in Richtung des Unterwerkzeugs, wobei der auf dem Beschichtungswerkstoff mittels des Injektionswerkzeugs ausgeübte Druck mindestens 1000 t/m² beträgt;
- Aushärten des Beschichtungswerkstoffs, so dass sich aus der Beschichtung eine transparente Außenhaut des Kraftfahrzeugkarosserieelements ausbildet, die eine Sichtfläche hoher Güte aufweist; und
- Entformen des resultierenden flächigen Kunststoffformteils, das aus dem Faserverbundelement und der Außenhaut gebildet ist.

Der Kern der Erfindung liegt also darin, ein Kraftfahrzeugkarosserieelement aus einem Faserverbundelement derart herzustellen, dass es außenseitig mit einer die Außenhaut bildenden Beschichtung versehen wird, die keine zusätzliche separate Lackierung erforderlich macht. Vielmehr ersetzt die Beschichtung aufgrund ihrer Sichtfläche, die insbesondere als so genannte Class-A-Oberfläche ausgebildet ist, die bisher erforderliche Lackierung. Damit entfällt ein aufwändiger Verfahrensschritt bei der Herstellung von Kraftfahrzeugkarosserieelementen, die ein Faserverbundelement aufweisen. Dies wird dadurch möglich, dass auf den in den Spalt zwischen dem Faserverbundelement und der entsprechenden Formhohlraumwand eingebrachten bzw. injizierten Beschichtungswerkstoff mittels des Injektionswerkzeugs, das ein Spritzgieß- oder ein Schäumwerkzeug sein kann, hoher Druck ausgeübt wird. Es handelt sich bei der Herstellung der Außenhaut mithin um einen Prägeprozess, bei dem ein hoher Schließdruck herrscht und bei dem die entsprechende Werkzeughälfte auf den Beschichtungswerkstoff zum Aufbau eines hohen Drucks gefahren wird.

Die Sichtfläche hoher Güte stellt insbesondere eine Class-A-Oberfläche dar, die sich zumindest weitgehend durch Krümmungsstetigkeit auszeichnet. Vorzugsweise ist sie eine Hochglanz-Sichtfläche.

Grundsätzlich sollte der auf den Beschichtungswerkstoff bei dessen Ausreagieren bzw. Aushärten ausgeübte Druck möglicht hoch sein. Erfindungsgemäß beträgt dieser Druck mindestens 1000 t/m², wobei bei einem Druck von mindestens 1000 t/m², besser noch mindestens 1800 t/m², gegebenenfalls eine besonders hohe Oberflächengüte erreicht werden kann.

Um beim Schließen des Injektionswerkzeugs eine hinreichende Entlüftung bei gleichzeitig hinreichender Dichtigkeit des Formhohlraums zur Herstellung der Außenhaut des Kunststoffformteils zu erreichen, wird bei einer bevorzugten Ausführungsform des Verfahrens nach der Erfindung als Injektionswerkzeug ein Tauchkantenwerkzeug eingesetzt.

Um eine Oberseite hinreichend hoher Güte auf dem zu beschichtenden Faserverbundelement herstellen zu können, wird der Spalt zwischen dem Faserverbundelement und der betreffenden Begrenzungsfläche des Formhohlraums des Spritzgieß- oder Schäumwerkzeugs bei einer zweckmäßigen Ausführungsform des Verfahrens nach der Erfindung auf 0,02 bis 2,0 mm, vorzugsweise auf etwa 1,0 mm eingestellt.

Als Beschichtungswerkstoffe für die Außenhaut des Kunststoffformteils können insbesondere Polyurethan- oder Polyureawerkstoffe eingesetzt werden.

Der eingesetzte Beschichtungswerkstoff ist bei einer bevorzugten Ausführungsform des Verfahrens nach der Erfindung zumindest nach seinem Aushärten transparent, so dass ein Faserverbundbauteil mit hoher Oberflächengüte hergestellt wird, bei dem die Struktur des Faserverbundelements von außen sichtbar ist. Die Außenhaut bildet damit ein so genanntes Clearcoat des Kunststoffformteils.

Denkbar ist es auch, dass der Beschichtungswerkstoff gefärbt ist. Dabei kann die Transparenz erhalten bleiben. Alternativ kann der Beschichtungswerkstoff aber nach seinem Aushärten auch opak bzw. farblich deckend sein, so dass ein Durchscheinen der Struktur des beschichteten Faserverbundelements verhindert wird. Auch die Oberseite einer derartigen Beschichtung weist eine hohe Güte auf.

Bei einer weiteren bevorzugten Ausführungsform des Verfahrens nach der Erfindung ist das flächige Faserwerkstoffhalbzeug ein Gelege, ein Gewebe oder eine Matte aus Kohlenstofffasern oder Glasfasern. Ein aus Kohlenstofffasern bestehendes Faserwerkstoffhalbzeug führt bei einer transparenten Beschichtung zu einem so genannten Sichtkarbonbauteil.

Das Verfahren nach der Erfindung kann so ausgeführt werden, dass das Faserverbundelement in einem separaten Fertigungswerkzeug hergestellt wird. Dies bedeutet, dass das Faserverbundelement zunächst in dem separaten Fertigungswerkzeug hergestellt wird und anschließend in das Injektionswerkzeug eingelegt und dort mit der die Außenhaut darstellenden Beschichtung versehen wird, und zwar dadurch, dass das Werkzeug mit dem in den Formhohlraum eingelegten Faserverbundelement geschlossen und der Beschichtungswerkstoff in den nach dem Schließen des Werkzeugs vorliegenden Spalt injiziert wird. Anschließend wird das Werkzeug weiter zugefahren, so dass ein zusätzlicher Druck auf den Beschichtungswerkstoff ausgeübt wird. Nach dem unter Druck erfolgenden Aushärten des Beschichtungswerkstoffs kann das resultierende flächige Kunststoffformteil entformt werden.

Alternativ kann das Verfahren so ausgeführt werden, dass das Faserverbundelement in dem Injektionswerkzeug selbst hergestellt wird, und zwar in dem Formhohlraum. Hierbei wird nach dem Aushärten des Faserverbundelements, das aus dem flächigen Faserwerkstoffhalbzeug und beispielsweise einem geeigneten Harz, insbesondere einem Epoxyharz besteht, das Werkzeug geringfügig geöffnet, so dass der Spalt entsteht, über den das Faserverbundelement von der Begrenzungswand des Formhohlraums beabstandet ist. Anschließend kann der Beschichtungswerkstoff in den Spalt injiziert werden, worauf auf den injizierten Beschichtungswerkstoff wiederum durch Zufahren des Werkzeugs Druck ausgeübt wird. Es erfolgt also wiederum ein Prägeprozess.

Es wird auch ein im Folgenden beschriebenes Kraftfahrzeugkarosserieelement vorgeschlagen, bestehend aus einem flächigen Kunststoffformteil, das ein Faserverbundelement umfasst, das aus einem flächigen Faserwerkstoffhalbzeug gebildet ist. Das Kunststoffformteil weist eine eine Außenhaut bildende injezierte, spritzgegossene oder geschäumte Beschichtung auf, die auf das Faserverbundelement direkt aufgebracht ist und eine Sichtfläche hoher Güte des Kunststoffformteils bildet.

Die Beschichtung kann aus einem Polyurethan- oder Polyureawerkstoff gebildet sein.

Das Faserwerkstoffhalbzeug ist bei einer bevorzugten Ausführungsform des Kraftfahrzeugkarosserieelements ein Gelege, ein Gewebe oder eine Matte aus Kohlefasern oder Glasfasern.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel des Gegenstandes der Erfindung ist in der Zeichnung schematisch vereinfacht dargestellt und wird in der nachfolgenden Beschreibung näher erläutert. Es zeigt:
- Figur 1: eine schematische Schnittdarstellung durch ein Faserverbundelement;
- Figur 2: einen Schnitt durch ein Spritzgießwerkzeug zum Herstellen einer Beschichtung auf dem Faserverbundelement nach Figur 1;
- Figur 3: eine Draufsicht auf das beschichtete Faserverbundelement; und
- Figur 4: einen Schnitt durch das beschichtete Faserverbundelement entlang der Linie IV-IV in Figur 3.

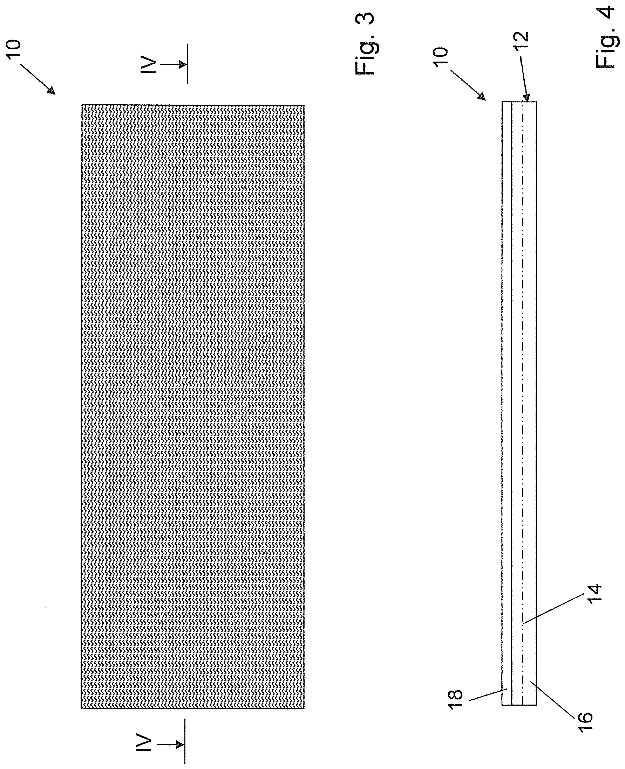

In den Figuren 3 und 4 ist ein Kraftfahrzeugkarosserieelement 10 dargestellt, welches als flächiges Kunststoffformteil ausgebildet ist und beispielsweise ein Verdeckablagekastendeckel eines als Cabriolet-Fahrzeug ausgebildeten Kraftfahrzeuges ist. Alternativ kann das Kraftfahrzeugkarosserieelement auch ein Dachsegment eines aus Festdachelementen bestehenden Cabriolet-Verdecks (RHT), ein Kofferraumdeckel, eine Motorhaube oder ein sonstiges Außenverkleidungsteil eines Kraftfahrzeuges sein.

Das Kraftfahrzeugkarosserieelement 10 umfasst als Träger ein Faserverbundelement 12, das aus einem Kohlefasergelege 14 gebildet ist, welches in einer Harzmatrix 16 eingebettet ist. Das Faserverbundelement 12 stellt mithin ein Carbonbauelement dar.

An seiner der Fahrzeugaußenseite zugewandten Seite ist das Faserverbundelement 12 mit einer Beschichtung versehen, die direkt auf das Faserverbundelement 12 aufgebracht ist und aus einem im ausgehärteten Zustand klaren Polyurethanwerkstoff gebildet ist. Die Beschichtung, die eine Außenhaut 18 des Kraftfahrzeugkarosserieelements 10 bildet, weist eine Hochglanzoberfläche hoher Güte auf und ermöglicht aufgrund ihrer Transparenz, dass die Struktur des Faserverbundelements 12 von der Fahrzeugaußenhaut aus sichtbar ist. Die Beschichtung 18 hat eine Dicke von etwa 0,05 mm bis 1,0 mm.

Die Fertigung des in den Figuren 3 und 4 dargestellten Kraftfahrzeugkarosserieelements 10 erfolgt in nachfolgend beschriebener Weise.

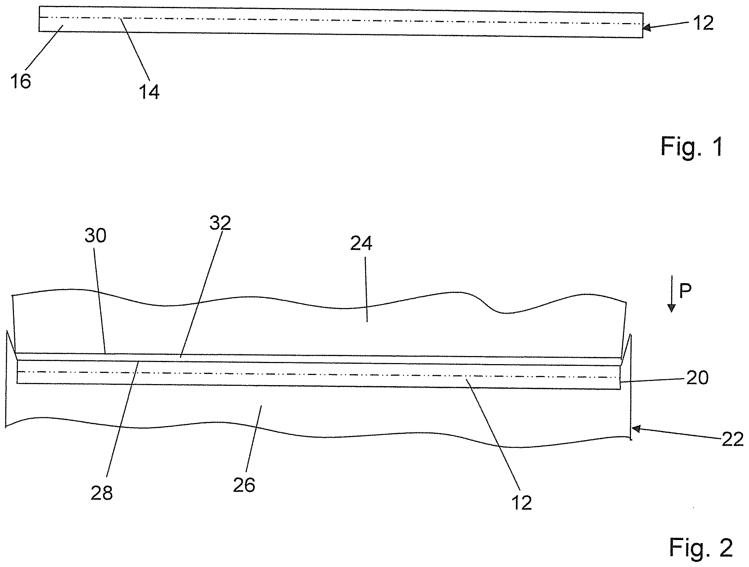

In einem ersten Verfahrensschritt wird das in Figur 1 dargestellte Faserverbundelement 12 in einem separaten Werkzeug aus einem flächigen Kohlenfaserhalbzeug und beispielsweise Epoxyharz gebildet. In seinem ausgehärteten Zustand wird dann das Faserverbundelement 12 in einem Formhohlraum 20 eines als Tauchkantenwerkzeug ausgebildeten Spritzgießwerkzeugs 22 angeordnet (vgl. Figur 2). Der Formhohlraum 20 ist von einem Oberwerkzeug 24 und einem Unterwerkzeug 26 des Spritzgießwerkzeugs 22 begrenzt. Das Faserverbundelement 12 liegt bei seiner Anordnung in dem Formhohlraum 20 an der von dem Unterwerkzeug 26 gebildeten Begrenzungsfläche des Formhohlraums 20 an. Beim Schließen des Werkzeugs 22 wird das Oberwerkzeug 24 so in Richtung des Unterwerkzeugs 26 verfahren, dass zwischen einer Oberseite 28 des Faserverbundelements 12 und einer von dem Oberwerkzeug 24 gebildeten und eine Hochglanzfläche darstellende Begrenzungsfläche 30 des Formhohlraums 20 ein Spalt 32 von etwa 0,05 mm bis 1 mm ausgebildet wird. Das Faserverbundelement 12 ist dann also über den Spalt 32 von der Begrenzungsfläche 30 des Formhohlraums 20 beabstandet.

Anschließend wird in den Spalt 32 zwischen dem Faserverbundelement 12 und der Begrenzungsfläche 30 ein Polyurethan- oder Polyureawerkstoff eingespritzt, so dass der Spalt 32 ausgefüllt ist. Daraufhin wird durch weiteres Schließen des Spritzgießwerkzeugs 22, das heißt durch weiteres Verfahren des Oberwerkzeugs 24 in Richtung des Unterwerkzeugs 26 ein Druck P auf den in den Spalt 32 eingespritzten Werkstoff ausgeübt. Dieser Druck wird beim Aushärten des Werkstoffs zur Ausbildung der in Figur 3 dargestellten Außenhaut 18 des Kraftfahrzeugkarosserieelements 10 aufrecht erhalten und beträgt etwa 250 t/m².

Nach dem Aushärten des Werkstoffes kann das fertige Kraftfahrzeugkarosserieelement 10 aus dem Spritzgießwerkzeug 22 entformt werden.

### Bezugszeichenliste

- 10: Kraftfahrzeugkarosserieelement
- 12: Faserverbundelement
- 14: Kohlefasergelege
- 16: Harzmatrix
- 18: Außenhaut
- 20: Formhohlraum
- 22: Spritzgießwerkzeug
- 24: Oberwerkzeug
- 26: Unterwerkzeug
- 28: Oberseite
- 30: Begrenzungsfläche
- 32: Spalt

## Patentansprüche

1. Verfahren zur Herstellung eines aus einem flächigen Kunststoffformteil gebildeten Kraftfahrzeugkarosserieelements (10), umfassend folgende Schritte:
- Herstellen eines Faserverbundelements (12), das aus einem flächigen Faserwerkstoffhalbzeug gebildet ist;
- Anordnen des Faserverbundelements (12) in einem Formhohlraum (20) eines Injektionswerkzeugs (22), das ein Oberwerkzeug (24) und ein Unterwerkzeug (26) umfasst, so dass eine zu beschichtende Oberseite (28) des Faserverbundelements (12) von einer Begrenzungsfläche (30) des Formhohlraums (20) über einen Spalt (32) beabstandet ist;
- Einbringen eines Beschichtungswerkstoffs in den Spalt (32), so dass sich an der zu beschichtenden Oberseite (28) des Faserverbundelements (12) eine Beschichtung ausbildet; anschließend
- Ausüben eines Drucks auf den Beschichtungswerkstoff mittels des Injektionswerkzeugs durch Verfahren des Oberwerkzeugs (24) in Richtung des Unterwerkzeugs (26), wobei der auf dem Beschichtungswerkstoff mittels des Injektionswerkzeugs (22) ausgeübte Druck mindestens 1000t/m² beträgt;
- Aushärten des Beschichtungswerkstoffs, so dass sich aus der Beschichtung eine transparente Außenhaut (18) des Kraftfahrzeugkarosserieelements ausbildet, die eine Sichtfläche hoher Güte aufweist; und
- Entformen des resultierenden flächigen Kunststoffformteils, das aus dem Faserverbundelement (12) und der Außenhaut (18) gebildet ist.

2. Verfahren nach Anspruch 1, **dadurch gekennzeichnet, dass** als Injektionswerkzeug (22) ein Tauchkantenwerkzeug eingesetzt wird.

3. Verfahren nach Anspruch 1 oder 2, **dadurch gekennzeichnet, dass** der Spalt (32) auf etwa 0,02 mm bis 2,0 mm eingestellt wird.

4. Verfahren nach einem der Ansprüche 1 bis 3, **dadurch gekennzeichnet, dass** der Beschichtungswerkstoff ein Polyurethan- oder Polyureawerkstoff ist.

5. Verfahren nach einem der Ansprüche 1 bis 4, **dadurch gekennzeichnet, dass** der Beschichtungswerkstoff gefärbt ist.

6. Verfahren nach einem der Ansprüche 1 bis 5, **dadurch gekennzeichnet, dass** das flächige Faserwerkstoffhalbzeug (14) ein Gelege, ein Gewebe oder eine Matte aus Kohlenstofffasern oder Glasfasern ist.

7. Verfahren nach einem der Ansprüche 1 bis 6, **dadurch gekennzeichnet, dass** das Faserverbundelement (12) in einem separaten Fertigungswerkzeug hergestellt wird.

8. Verfahren nach einem der Ansprüche 1 bis 5, **dadurch gekennzeichnet, dass** das Faserverbundelement in dem Formhohlraum des Injektionswerkzeugs hergestellt wird.

## Claims

1. A method for producing a motor vehicle body member (10) being formed from a flat plastics molded part, comprising the following steps:
- producing a fiber composite member (12), which is formed from a flat semifinished product being made up of fibrous material;
- arranging the fiber composite member (12) in a mold cavity (20) of an injection tool (22) having an upper tool (24) and a lower tool (26), such that an upper side (28) of the fiber composite member (12), which side is supposed to be coated, is spaced apart from a limiting surface (30) of the mold cavity (20) via a gap (32);
- introducing a coating material into the gap (32), such that a coating is formed at the upper side (28) of the fiber composite member (12), which side is supposed to be coated; subsequently
- exerting a pressure on the coating material with the aid of the injection tool by advancing the upper tool (24) further in the direction of the lower tool (26), wherein the pressure exerted on the coating material with the aid of the injection tool (22) is at least 1000 t/m²;
- hardening the coating material, such that a transparent outer skin (18) of the motor vehicle body member is formed from the coating, comprising a high quality viewing surface; and
- demolding the resulting flat plastics molded part, which is formed from the fiber composite member (12) and from the outer skin (18).

2. The method according to claim 1, **characterized in that** a shearing edge tool is utilized as the injection tool (22).

3. The method according to claim 1 or 2, **characterized in that** the gap (32) is adjusted to dimensions approximately from 0.02 mm to 2.0 mm.

4. The method according to one of the claims 1 to 3, **characterized in that** the coating material is a polyurethane or polyurea material.

5. The method according to one of the claims 1 to 4, **characterized in that** the coating material is colored.

6. The method according to one of the claims 1 to 5, **characterized in that** the flat semifinished product (14) being made up of fibrous material is a nonwoven textile, a woven cloth or a mat being made of carbon fibers or of glass fibers.

7. The method according to one of the claims 1 to 6, **characterized in that** the fiber composite member (12) is produced in a separate manufacturing tool.

8. The method according to any one of the claims 1 to 5, **characterized in that** the fiber composite member is produced in the mold cavity of the injection tool.

## Revendications

1. Dispositif pour la production d'un élément de carrosserie de véhicule automobile (10) réalisé d'une pièce moulée plastique plane, comprenant des étapes suivantes :
- produire un élément de composite de fibres (12) réalisé d'un produit demi-fini de matériau fibreux plan ;
- disposer l'élément de composite de fibres (12) dans une cavité de moulage (20) d'un outil d'injection (22) comprenant un outil en haut (24) et un outil en bas (26), de telle manière qu'une surface (28) de l'élément de composite de fibres (12) qui est à revêtir est espacée d'une surface de périphérie (30) de la cavité de moulage (20) à travers d'une fissure (32) ;
- incorporer un matériau de revêtement dans la fissure (32) de telle manière qu'un revêtement est réalisé à la surface (28) de l'élément de composite de fibres (12) ; ensuite
- exercer une pression au matériau de revêtement en utilisant l'outil d'injection par agir l'outil en haut (24) vers l'outil en bas (26), la pression exerçante au matériau de revêtement en utilisant l'outil d'injection (22) est à au moins 1000 t/m² ;
- le matériau de revêtement vieillit, de sorte qu'une enveloppe extérieure (18) transparente de l'élément de carrosserie de véhicule automobile se réalise comprenant une face visible de qualité élevée ; et
- démouler la pièce moulée plastique plane qui en résulte et qui se constitue de l'élément de composite de fibres (12) et l'enveloppe extérieure (18).

2. Procédé selon la revendication 1, **caractérisé en ce qu'**un outil à bords plongeants est utilisé comme outil d'injection (22).

3. Procédé selon les revendications 1 ou 2, **caractérisé en ce que** la fissure (32) est réglée environ à 0,02 mm jusqu'à 2,0 mm.

4. Procédé selon l'une quelconque des revendications 1 à 3, **caractérisé en ce que** le matériau de revêtement est un matériau à base de polyuréthane ou à base de polyurea.

5. Procédé selon l'une quelconque des revendications 1 à 4, **caractérisé en ce que** le matériau de revêtement est coloré.

6. Procédé selon l'une quelconque des revendications 1 à 5, **caractérisé en ce que** le produit demi-fini de matériau fibreux plan (14) est un textile non-tissé, un textile tissé ou une natte fait des fibres de carbone ou des fibres de verre.

7. Procédé selon l'une quelconque des revendications 1 à 6, **caractérisé en ce que** l'élément de composite de fibres (12) est produit dans un outil de fabrication séparé.

8. Procédé selon l'une quelconque des revendications 1 à 5, **caractérisé en ce que** l'élément de composite de fibres est produit dans la cavité de moulage de l'outil d'injection.
